# EUROPÄISCHE PATENTSCHRIFT

(11) **EP 0 464 668 B1**
(45) Veröffentlichungstag und Bekanntmachung des Hinweises auf die Patenterteilung: **02.02.1994**
(21) Anmeldenummer: 91110652.4
(22) Anmeldetag: 27.06.1991
(51) Int. Cl.: B23D 61/10

(54) **Spannsystem für ein Innenlochsägeblatt und seine Verwendung beim Zersägen von Stäben, insbesondere aus Halbleitermaterial, in Scheiben**
Tensioning device for an inner diameter saw blade and its use for sawing rods, in particular from semiconductor material, into wafers
Dispositif de tension pour une lame de scie annulaire et son usage dans le découpage de tiges, en particulier de matériau semi-conducteur, en plaquettes

(30) Priorität: 29.06.1990 DE 4020827
(43) Veröffentlichungstag der Anmeldung: 08.01.1992
(73) Patentinhaber: Wacker-Chemitronic Gesellschaft für Elektronik-Grundstoffe mbH, D-84489 Burghausen (DE)
(72) Erfinder: Malcok, Hanifi, W-8263 Burghausen (DE)

(56) Entgegenhaltungen:
- DE-C- 2 841 653
- US-A- 4 498 449
- US-A- 4 716 881

## Beschreibung

Die Erfindung betrifft ein Spannsystem für ein Innenlochsägeblatt, bei welchem das Sägeblatt an seinem äußeren Rand mittels eines über Halteelemente mit einem Maschinendrehteil verbundenen Halteringes gehalten und durch einen in den Haltering integrierten, mittels über den Umfang des Halteringes verteilte Spannelemente in eine Aussparung im Maschinendrehteil hineindrückbaren Spannring gespannt wird. Sie betrifft ferner die Verwendung des Spannsystems beim Zersägen von Stäben, insbesondere aus Halbleitermaterial, in Scheiben.

Innenlochsägen werden hauptsächlich in den Fällen für das Abtrennen von Scheiben von stabförmigen Werkstücken eingesetzt, in denen höchste Genauigkeit beim Trennvorgang gefordert ist. Hauptsächliches Einsatzgebiet ist daher die Halbleitertechnik, in der die "wafer", dünne Scheiben von typisch 0.1 bis 1 mm Dicke, von zumeist einkristallinen Stäben des Halbleitermaterials, im allgemeinen Elementhalbleiter wie Silicium oder Germanium, oder Verbindungshalbleiter wie Galliumarsenid oder Indiumphosphid, abgetrennt werden. Daneben werden Innenlochsägen z.B. auch beim geringe Toleranzen erlaubenden Zersägen von oxidischen Materialien wie Gallium-Gadolinium-Granat oder Quarz bzw. Quarzglas in Scheiben verwendet.

Mit derartigen Innenlochsägen sind vor allem aus dem Grund hohe Genauigkeiten zu erzielen, daß das Sägeblatt an seinem Außenrand gehalten und in der Art eines Trommelfelles straff gespannt wird, wodurch die mit Schneidkorn besetzte, das Innenloch umgebende Schneidkante des Sägeblattes beim Trennvorgang, verglichen mit Außentrennsägen, stabiler gegenüber Auslenkungen geführt wird. Dementsprechend wichtig ist jedoch das genaue Einspannen des in der Regel aus gewalztem Stahl gefertigten Sägeblattes. Bei diesem Vorgang sind beispielsweise durch den Walzvorgang bedingte Schwankungen der Werkstoffkennwerte, z.B. der Verformbarkeit, auszugleichen und ein von radialen und axialen Unwuchten freier, zentrischer Lauf des Sägeblattes und insbesondere der Schneidkante einzustellen, um schließlich zu guten Sägeergebnissen kommen zu können. Wichtig ist dabei auch, daß diese Einstellung während des Sägevorganges unter dem Einfluß der auf das Sägeblatt einwirkenden Kräfte sich möglichst nicht verändert.

Mit Spannsystemen der eingangs genannten Art, wie sie etwa aus der DE-PS 28 41 653 oder der US-PS 4,498,449 bekannt sind, lassen sich Innenlochsägeblätter mit einer Genauigkeit einspannen, die beim Zersägen von Halbleiter-, insbesondere Siliciumstäben bis zu etwa 10 cm Durchmesser befriedigende Ausbeuten an Scheiben innerhalb der üblichen Toleranzen bezüglich der von den Bauelementeherstellern vorgegebenen geometrischen Kenngrößen ermöglicht. Bei größeren Stabdurchmessern, ebenso wie bei strengeren Vorgaben bezüglich der Scheibengeometrie, steigt jedoch der Anteil der gesägten Scheiben, die den Anforderungen an die geometrische Präzision nicht mehr gerecht werden und daher verworfen werden müssen.

Die Aufgabe der Erfindung lag daher darin, ein Spannsystem anzugeben, das ein demgegenüber zuverlässigeres Einspannen der Innenlochsägeblätter ermöglicht und mit dem sich beim Zertrennen von Halbleiterstäben in Scheiben auch strenge geometrische Anforderungen mit guten Ausbeuten erfüllen lassen.

Gelöst wird die Aufgabe durch ein Spannsystem der eingangs genannten Art, welches dadurch gekennzeichnet ist, daß die axial verstellbaren Spannelemente mit dem Maschinendrehteil lösbar verbunden sind und das Sägeblatt an seiner dem Innenrand des Maschinen drehteiles gegenüber liegenden Seite eine axiale Abstützung findet.

Die Erfindung wird nachstehend an Hand der Figuren 1 bis 3 näher erläutert. Analoge Bauteile sind dabei mit den selben Bezugszeichen versehen.

Figur 1 zeigt dabei schematisch ein bei Innenlochsägen übliches Maschinendrehteil mit über ein Spannsystem eingespanntem Innenlochsägeblatt.

Figur 2 (a + b) zeigt eine mögliche Ausführungsform des erfindungsgemäßen Spannsystems.

Figur 3 (a + b) zeigt eine mögliche Weiterbildung des erfindungsgemäßen Spannsystems, die zugleich mit dem genauen Einspannen des Sägeblattes eine Korrektur seiner Laufungenauigkeiten in axialer Richtung ("Axialschlag") ermöglicht.

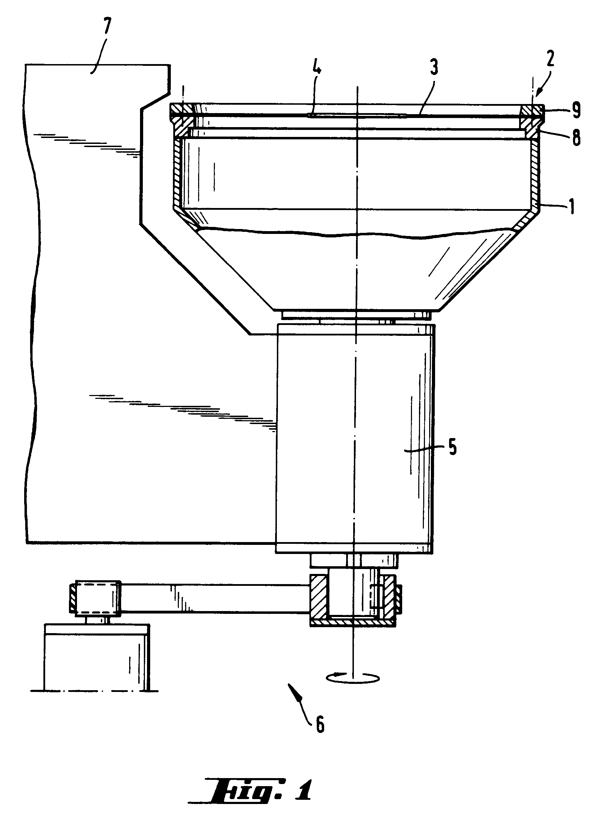

In Fig. 1 ist das sich becherartig aufweitende Maschinendrehteil 1 dargestellt, an dessen Stirnseite das Spannsystem 2, in der Regel durch Verschrauben, befestigt ist. Mit Hilfe des Spannsystems 2 wird das Innenlochsägeblatt 3 von seinem Außenrand her straff gespannt, so daß die zumeist tropfenförmigen Querschnitt aufweisende, mit in eine Nickelbeschichtung eingebetteten Diamantschneidkörnern versehene, die zentrale Bohrung des Sägeblattes umgebende Schneidkante 4 einen von radialen und axialen Fehlern möglichst freien Rundlauf zeigt. Das Drehteil läuft in einem Lager 5 und wird von einem Antrieb 6, in der Regel einem Elektromotor, auf die gewünschte Drehzahl gebracht. Der die Anordnung haltende Rahmen 7 ist hier nur schematisch dargestellt; grundsätzlich wird bei den verschiedenen bekannten Gerätetypen entweder eine vertikale oder eine horizontale Lage der Drehachse eingehalten.

Beim Sägevorgang wird das zu zersägende Werkstück, beispielsweise ein Halbleiterstab, mit Hilfe der aus Gründen der Übersichtlichkeit nicht dargestellten Werkstückzustellung, die vorgesehene Strecke in das Innenloch eingeführt. Über eine Vorschubeinrichtung wird dann eine Relativbewegung zwischen Werkstück und Sägeblatt ausgeführt, in deren Verlauf sich die Schneidkante durch das Werkstück hindurcharbeitet und schließlich die gewünschte Scheibe abtrennt. Nach deren Entnahme werden Werkstück und Sägeblatt erneut in Schnittposition gebracht, und die nächste Scheibe kann abgetrennt werden.

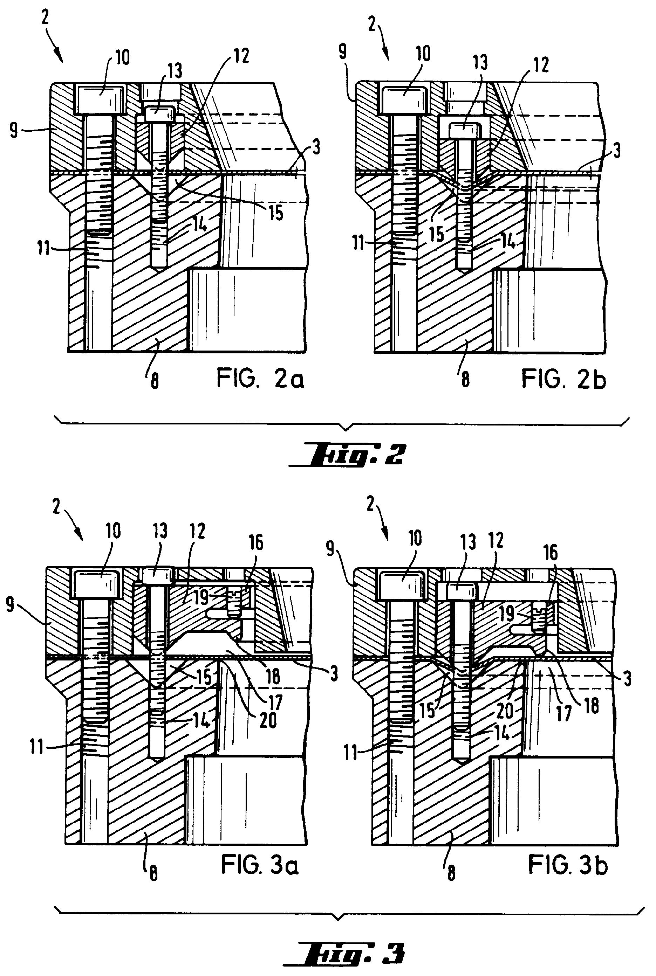

In Fig. 2 ist eine mögliche Ausführungsform des erfindungsgemäßen Spannsystems dargestellt, und zwar in der linken Darstellung (Fig. 2 a) in ungespanntem, in der rechten Darstellung (Fig. 2 b) in gespanntem Zustand. Das Sägeblatt 3 liegt dabei mit seinem Außenrand auf dem Stirnteil 8 des Maschinendrehteils 1 auf. Das Einklemmen des Sägeblattes geschieht mit Hilfe eines Halteringes 9, der auf das Sägeblatt aufgelegt und zunächst mit Hilfe von geeigneten Halteelementen, vorzugsweise Halteschrauben 10, über seinen gesamten Umfang verteilt über paßgerecht vorgegebene Fixierungen, vorzugsweise Gewindebohrungen 11 mit dem Stirnteil verbunden, vorzugsweise verschraubt wird. Dadurch ist zunächst das Sägeblatt an seinem äußeren Rand zwischen Stirnteil und Haltering fixiert, befindet sich jedoch noch im ungespannten Zustand.

In diesem Zustand wird der in den Haltering integrierte, in axialer Richtung verschiebbare Spannring 12 mittels der vorgesehenen Spannelemente, insbesondere Spannschrauben 13 nicht gegen das Sägeblatt gedrückt; diese greifen nur locker in die paßgerecht im Stirnteil vorgegebenen Aufnahmen, die insbesondere als Gewindebohrungen 14 gestaltet sind, ein. Das Sägeblatt erfährt somit auch noch keine deformierende Kraft, die es in Richtung der im Stirnteil zu seiner Aufnahme vorgesehenen Ausnehmung, vorteilhaft einer Ringnut 15, die zweckmäßig paßgerecht zur auf das Sägeblatt einwirkenden Oberfläche des Spannringes geformt ist, aus der ungespannten Ausgangslage auslenkt.

Beim Spannvorgang werden die über den Umfang des Spannringes verteilten Spannelemente, insbesondere Spannschrauben 13, nach und nach angezogen. Dadurch wird der Spannring 12 immer stärker gegen das Sägeblatt 3 gezogen und drückt dieses in die Ringnut 15. Je nach Stärke dieser Deformation, d.h. mit weiterem oder weniger weitem Einschrauben der Spannschrauben kann auf das Sägeblatt über den Umfang verteilt eine mehr oder minder starke Zugspannung aufgebracht werden, so daß es letztlich möglich ist, dem Sägeblatt die für einen genauen Sägevorgang erforderliche gleichmäßige und straffe Spannung zu verleihen. Durch den Spannvorgang lassen sich zugleich radiale Unregelmäßigkeiten im Lauf der Schneidkante ausgleichen, indem durch entsprechende Anpassung der Spannung des Sägeblattes der Innenlochumfang mehr oder weniger stark nach außen gezogen wird. Dabei ist eine um so feiner abgestufte Einstellung möglich, je geringer die Gewindesteigung ist, wobei jedoch in der Regel die üblichen Gewindesteigungen von 0.5 bis 1.5 mm einen ausreichend genauen Spannvorgang ermöglichen.

Vorteilhaft werden die Spannschrauben, die entsprechenden Durchführungsöffnungen für sie im Spannring und die entsprechenden Gewindebohrungen in der Ringnut gleichmäßig über den Umfang des Spannringes verteilt und zweckmäßig in gleichem Abstand voneinander angeordnet. Dadurch wird sichergestellt, daß die auf das Sägeblatt einwirkenden Spannkräfte sich gleichmäßig über seinen Umfang verteilen und durch ungleichmäßige Massenverteilung bedingte Unwuchten im System Maschinendrehteil/Spannsystem/Sägeblatt bei der Rotation vermieden werden. Dabei ist es nicht zwingend vorgeschrieben, daß die Anzahl der Spannschrauben gleich oder halb so groß wie die Anzahl der Halteschrauben ist, obwohl sich solche gleich- oder halbzahligen Ausführungsformen als besonders günstig erwiesen haben, da sie am einfachsten eine möglichst rotationssymmetrische und damit von Unwuchten freie Massenverteilung gewährleisten. In diesem bevorzugten Fall haben sich Anordnungen bewährt, bei denen Spann- und Halteschrauben jeweils hintereinander auf einer strahlenartig zur Rotationsachse weisenden Linie, oder aber in einer demgegenüber jeweils mittig versetzten Position vorgesehen sind. Zweckmäßig wird die Anzahl der über den Umfang des Spannringes verteilten Spannschrauben so gewählt, daß die Winkel zwischen aufeinanderfolgenden Spannschrauben, von der Drehachse des Systems aus gemessen, im Bereich von 5° bis 30°, vorzugsweise 10° bis 20° liegen, wobei diese Winkel vorteilhaft den gleichen Wert besitzen. Als besonders stabil haben sich Anordnungen erwiesen, bei denen die Entfernungen der Spannschrauben untereinander, jeweils von Schraubenmitte zu Schraubenmitte und entlang der gekrümmten Mittellinie des Spannringes gemessen, im Bereich von 50 bis 100 mm liegen und vorzugsweise gleich sind.

Der Vorteil des erfindungsgemäßen Spannsystems liegt darin, daß die das Sägeblatt haltenden, durch den Haltering ausgeübten Klemmkräfte und die Spannkräfte gleichsinnig wirken und dadurch sowohl eine verbesserte Klemmung als auch eine zuverlässigere Spannung des Sägeblattes erreicht wird. Überraschend wurde auch gefunden, daß die erforderlichen zusätzlichen Bohrungen im Sägeblatt keine erhöhte Verformungs- oder Rißanfälligkeit bzw. Instabilitäten beim Sägevorgang zur Folge haben. Hingegen wirken bei den bekannten Spannsystemen die durch die Spannschrauben ausgeübten Spannkräfte den Klemmkräften entgegen und verursachen eine Verformung des Halteringes und letztlich eine geringere Haftung des Sägeblattes, bedingt durch die Aufweitung der Klemmflächen. Die Auswirkungen in der Praxis sind schlechter Rundlauf und "aus dem Ring gezogene", d.h. beim Spannen zu stark verformte, nicht mehr einwandfrei im Haltering sitzende Sägeblätter.

Eine Weiterbildung der Erfindung, die neben dem Einspannen und der Korrektur von radialen auch eine Korrektur von axialen Laufunregelmäßigkeiten des Sageblattes ermöglicht, ist in der Figur 3 dargestellt, wobei links (Fig. 3 a) der ungespannte, rechts (Fig. 3 b) der gespannte Zustand gezeigt ist. Der Spannring 12 geht dabei an seinem Innenumfang in ein Brückenteil 16 über, welches bis in den freien Bereich 17 des Sägeblattes übergreift und über einen vorzugsweise wulstartigen Vorsprung 18 verfügt, und dem mit Hilfe von Verstelleinrichtungen, bevorzugt Stellschrauben 19, eine Auslenkung in axialer Richtung aufgegeben werden kann.

Beim Spannen des Sägeblattes wird analog dem im Zusammenhang mit der Fig. 2 beschriebenen Verfahren durch den Spannring das Sägeblatt in die Ringnut 15 gedrückt. Zusätzlich kann nun, durch mehr oder weniger starkes Anziehen der Stellschrauben 19, das Sägeblatt in axialer Richtung aus der durch die Innenkante 20 des Stirnteils vorgegebenen Standardposition ausgelenkt werden. Damit lassen sich die Abweichungen des Sägeblattes in axialer Richtung von seinem idealen, ungestörten Lauf, der sog. "Axialschlag", der in der Regel Werte bis zu etwa 100 µm erreichen kann, ausgleichen.

Die Stellschrauben werden in der Regel in der gleichen Anzahl und in analoger Anordnung wie die Spannschrauben vorgesehen. Ebenso wichtig ist eine rotationssymmetrische, gleichmäßige Verteilung über den Umfang des Brückenteils, um massebedingte Unwuchten zu vermeiden. Bisweilen kann jedoch eine erhöhte Anzahl erforderlich sein, um die Auslenkung des Vorsprunges 18 ausreichend genau einstellen zu können, was beispielsweise bei großen Spannringdurchmessern der Fall sein kann. Auch solche Anordnungen laufen jedoch erfahrungsgemäß am ruhigsten, wenn sie bezüglich der Halte-, Spann- und Stellschrauben rotationssymmetrisch sind.

Beim Spannvorgang lassen sich Axial- und Radialschlag des Sägeblattes jeweils bei Probedrehungen des Sägeblattes mit Hilfe geeigneter Meßgeräte und Sensoren, beispielsweise handelsüblichen optischen Rundlaufmeßvorrichtungen oder mechanischen Tastern ortsabhängig ermitteln. Daraus ergibt sich dann die Position der Spannschrauben sowie, bei der Ausführungsform der Erfindung gemäß Fig. 3, auch der Stellschrauben, die einer Nachregelung bedürfen und ob diese stärker oder weniger stark angezogen werden müssen, um eine optimale Justierung des Sägeblattes zu erreichen. In den meisten Fällen kann sogar, nach wenigen Vorversuchen, aus der gemessenen Abweichung auf die zu ihrer Korrektur erforderliche Anzahl von Umdrehungen der in der geeigneten Position befindlichen Spann- und ggf. Stellschrauben geschlossen werden.

Mit Hilfe der erfindungsgemäßen Spannsysteme lassen sich Innenlochsägeblätter mit hoher, über lange Einsatzzeiten des Sägeblattes konstant bleibender Präzision in die zu ihrer Aufnahme vorgesehenen Maschinendrehteile einspannen, wobei sich außerdem auch höhere Sägeblattspannungen erzielen lassen. Dementsprechend erhöht sich einerseits die Schnittpräzision beim eigentlichen Sägevorgang, andererseits auch die Standzeit der Sägeblätter, was sich wiederum in geringeren Rüstzeiten und höherer Sägeleistung niederschlägt. Mit besonderem Vorteil wird das Spannsystem daher bei Sägevorgängen verwendet, bei denen es auf höchste Präzision ankommt. Bevorzugtes Einsatzgebiet ist somit das Innenlochsägen von Kristallstäben, insbesondere Halbleiterstäben, und zwar vorzugsweise von Stäben aus einkristallinem Silicium.

Nachstehend wird die Erfindung an Hand eines Ausführungsbeispieles näher erläutert:

### Beispiel:

Bei einer handelsüblichen Anordnung zum Innenlochsägen von einkristallinen Siliciumstäben, welche analog der in Fig. 1 dargestellten Vorrichtung aufgebaut war, war das Maschinendrehteil (Außendurchmesser ca. 690 mm) für den Einsatz des erfindungsgemäßen Spannsystems umgerüstet worden. Dazu waren an seiner Stirnseite in die konzentrisch umlaufende, ca. 3.5 mm konkav eingefräste Ringnut zusätzlich im 12°-Abstand insgesamt 30 Gewindebohrungen (Gewindesteigung 1 mm) eingebracht worden, um dann beim eigentlichen Spannvorgang die Spannschrauben in das Maschinendrehteil eindrehen zu können. Der Abstand von Schraube zu Schraube betrug damit ca. 65.5 mm.

Entsprechend positionierte und dimensionierte Bohrungen waren auch in den kreisrunden Spannring (Durchmesser ca. 645 mm, Querschnitt wie in Fig. 2 dargestellt) sowie in das zum Einspannen vorgesehene kreisrunde Sägeblatt (Innenlochdurchmesser ca. 235 mm, Nickel/Diamant-besetzte Schneidkante) aus gewalztem Edelstahl (Dicke ca. 0.15 mm) eingebracht worden.

Nun wurde zunächst in der üblichen Weise das Sägeblatt mit Hilfe von am Maschinendrehteil vorgesehenen Positionierstiften in die Ausgangsposition auf das Stirnteil und darüber der Haltering mit dem darin integrierten, axial beweglichen Spannring aufgelegt. Danach wurden die 60 im 6°-Winkelabstand über den Haltering verteilten Halteschrauben eingedreht und festgezogen, so daß schließlich das Sägeblatt an seinem Außenrand fest zwischen Haltering und Maschinendrehteil eingeklemmt war, jedoch noch keine Spannung aufwies.

Als nächstes wurden nun die 30 Spannschrauben in die zu ihrer Aufnahme vorgesehenen Bohrungen - diese lagen bezogen auf die Drehachse des Systems jeweils nicht in Linie mit den Halteschrauben, sondern mittig versetzt - eingeführt und soweit angezogen, daß der Spannring an seinem gesamten Umfang in Kontakt mit dem Sägeblatt war. Danach wurde eine Grundspannung auf das Sägeblatt aufgebracht, indem jede Schraube eine volle Umdrehung angezogen wurde. Anschließend wurde eine Umdrehung des Maschinendrehteils ausgeführt und dabei die radiale Abweichung der Schneidkante des Sägeblattes vom ideal kreisförmigen Lauf ortsabhängig mit Hilfe einer handelsüblichen Meßoptik ermittelt. Je nach Stärke der Abweichung wurden nun die Spannschrauben in den jeweiligen Bereichen mehr oder weniger stark weiter angezogen und dadurch das Innenloch des Sägeblattes mit wechselnder Stärke nach außen gedehnt, um seinen "Radialschlag" auszugleichen. An den Spannschritt schloß sich eine weitere Sägeblattdrehung und ortsabhängige Messung des noch verbliebenen "Radialschlages" an. Entsprechend den gemessenen, bereits deutlich geringeren Abweichungen wurden nun erneut die Spannschrauben in den zu wenig gedehnten Bereichen angezogen, wobei die die aus einer bestimmten Umdrehungszahl der Spannschrauben resultierende Innenlochdehnung aus Vorversuchen überschlägig bekannt war und daraus die erforderliche Schraubendrehung abgeschätzt werden konnte. Bei einer abschließenden Sägeblattdrehung zeigte sich, daß der "Radialschlag" auf eine Abweichung von weniger als 20 µm vom idealen kreisförmigen Verlauf des Innenloches und damit der Schneidkante reduziert war.

Mit dem solcherart in das Spannsystem eingespannten Sägeblatt wurden nun in der üblichen Art und Weise einkristalline Siliciumstäbe (Stabdurchmesser ca. 150 mm) in Scheiben mit ca. 850 µm Dicke zersägt.

In einem Kontrollversuch wurde in einer Innenlochsäge gleicher Bauart das Sägeblatt in ein konventionelles Spannsystem gemäß DE-PS 28 41 653 eingespannt, bei dem keine Schraubverbindung der Spannschrauben mit dem Maschinendrehteil bestand. Ansonsten erfolgte das Einspannen nach der oben genannten Methode, bis der Radialschlag auf einen Wert unterhalb 20 µm gedrückt war. Mit dem solcherart eingespannten Sägeblatt wurden parallel unter ansonsten gleichen Verfahrensbedingungen ebenfalls einkristalline Siliciumstäbe (Durchmesser ca. 150 mm) in Scheiben mit ca. 850 µm Dicke zersägt.

Die Auswertung beider Sägevorgänge ergab, daß verglichen mit dem Kontrollversuch bei dem erfindungsgemäßen Spannsystem die Anzahl der zum Nachschärfen des Sägeblattes erforderlichen Schärfeingriffe deutlich verringert werden konnte; sie lag bei etwa einem Drittel der Zahl der bei dem herkömmlichen Spannsystem erforderlichen Schärfeingriffe. Die Anzahl der innerhalb einer Acht-Stunden-Schicht gesägten Scheiben lag bei der mit dem erfindungsgemäßen Spannsystem ausgerüsteten Säge um ca. 18% über der Säge mit dem konventionell eingespannten Sägeblatt. Außerdem konnte eine um 70% verlängerte Sägeblattstandzeit erzielt werden.

## Patentansprüche

1. Spannsystem (2) für ein Innenlochsägeblatt (3), bei welchem das Sägeblatt an seinem äußeren Rand mittels eines über Halteelemente (10) mit einem Maschinendrehteil (1) verbundenen Halteringes (9) gehalten und durch einen in den Haltering integrierten, mittels über den Umfang des Halteringes verteilte axial verstellbare Spannelemente (13) in eine Aussparung im Maschinendrehteil hineindrückbaren Spannring (12) gespannt wird, dadurch gekennzeichnet, daß die axial verstellbaren Spannelemente mit dem Maschinendrehteil lösbar verbunden sind und das Sägeblatt an seiner dem Innenrand des Maschinendrehteiles gegenüber liegenden Seite eine axiale Abstützung findet.

2. Spannsystem nach Anspruch 1, dadurch gekennzeichnet, daß als Spannelemente in das Maschinendrehteil eingreifende Spannschrauben vorgesehen sind.

3. Spannsystem nach den Ansprüchen 1 oder 2, dadurch gekennzeichnet, daß der Spannring an seinem Innenumfang in ein Brückenteil (16) übergeht, welches bis in den freien Bereich (17) des Sägeblattes übergreift und über einen vorzugsweise wulstartigen Vorsprung (18) verfügt, und dem mit Hilfe von Verstelleinrichtungen eine Auslenkung in axialer Richtung aufgegeben werden kann.

4. Spannsystem nach Anspruch 3, dadurch gekennzeichnet, daß als Verstelleinrichtungen Stellschrauben (19) vorgesehen sind.

5. Spannsystem nach einem oder mehreren der Ansprüche 1 bis 4, dadurch gekennzeichnet, daß daß die Winkel zwischen aufeinanderfolgenden Spannelementen, von der Drehachse des Spannsystems aus betrachtet, im Bereich von 5° bis 30° liegen.

6. Spannsystem nach Anspruch 5, dadurch gekennzeichnet, daß die Winkel gleich sind.

7. Spannsystem nach einem oder mehreren der Ansprüche 1 bis 6, dadurch gekennzeichnet, daß die Spannelemente, von der Drehachse des Spannsystems aus betrachtet, gegenüber den Halteelementen mittig versetzt angeordnet sind.

8. Verwendung von Spannsystemen nach einem oder mehreren der Ansprüche 1 bis 7 beim Innenlochsägen von Stäben, insbesondere aus Halbleitermaterial.

9. Verwendung nach Anspruch 8, wobei Scheiben von 0.1 bis 1 mm Dicke von Halbleiterstäben, insbesondere Siliciumstäben abgetrennt werden.

## Claims

1. Clamping system (2) for an annular-saw blade (3), in which the saw blade is held at its outer margin by means of a holding ring (9), connected via holding elements (10) to a machine rotary part (1) , and is tensioned by a clamping ring, which is integrated into the holding ring and can be pressed into a recess in the machine rotary part by means of axially adjustable clamping elements (13) distributed over the periphery of the holding ring (12), characterised in that the axially adjustable clamping elements are releasably connected to the machine rotary part and the saw blade is axially supported on its side lying opposite the inner edge of the machine rotary part.

2. Clamping system according to Claim 1, characterised in that clamping screws engaging in the machine rotary part are provided as clamping elements.

3. Clamping system according to Claims 1 or 2, characterised in that the clamping ring merges at its inner periphery into a bridge part (16), which juts out into the free region (17) of the saw blade and has a preferably bead-like projection (18), and to which a deflection in the axial direction can be imparted with the aid of adjusting devices.

4. Clamping system according to Claim 3, characterised in that setscrews (19) are provided as adjusting devices.

5. Clamping system according to one or more of Claims 1 to 4, characterised in that the angles between successive clamping elements, seen from the axis of rotation of the clamping system, lie in the range from 5° to 30°.

6. Clamping system according to Claim 5, characterised in that the angles are the same.

7. Clamping system according to one or more of Claims 1 to 6, characterised in that the clamping elements, seen from the axis of rotation of the clamping system, are arranged centrally offset in relation to the holding elements.

8. Use of clamping systems according to one or more of Claims 1 to 7 in the annular sawing of bars, in particular of semiconductor material.

9. Use according to Claim 8, wafers of 0.1 to 1 mm thickness being cut off semiconductor bars, in particular silicon bars.

## Revendications

1. Système de serrage (2) pour une lame de scie annulaire (3), dans lequel la lame de scie est maintenue sur son bord extérieur au moyen d'une bague de retenue (9) raccordée par l'intermédiaire d'éléments de retenue (10) à une partie tournante de la machine (1) et est serrée par une bague de serrage (12), qui est intégrée dans la bague de retenue et peut être repoussée dans un évidement situé dans la partie tournante de la machine au moyen d'éléments de serrage (13) déplaçables axialement et répartis sur la périphérie de la bague de retenue, caractérisé en ce que les éléments de serrage déplaçables axialement sont raccordés de façon amovible à la partie tournante de la machine, et que la lame de scie est supportée axialement au niveau de sa face tournée à l'opposé de la paroi intérieure de la partie tournante de la machine.

2. Dispositif de serrage selon la revendication 1, caractérisé en ce qu'il est prévu, comme éléments de serrage, des vis de serrage s'engageant dans la partie tournante de la machine.

3. Dispositif de serrage selon les revendications 1 ou 2, caractérisé en ce que la bague de serrage se prolonge au niveau de son pourtour intérieur par un élément en forme d'étrier (16), qui s'étend au-dessus de la lame de scie jusque dans la zone libre (17) de cette dernière et comporte une partie saillante (18) de préférence en forme de rebord, que l'on peut faire fléchir dans la direction axiale, à l'aide de dispositifs de réglage.

4. Dispositif de serrage selon la revendication 3, caractérisé en ce qu'il est prévu, comme dispositifs de réglage, des vis de réglage (10).

5. Dispositif de serrage selon une ou plusieurs des revendications 1 à 4, caractérisé en ce que les angles, mesurés par rapport à l'axe de rotation du système de serrage, entre des éléments de serrage successifs sont situés dans la gamme allant de 5° à 30°.

6. Dispositif de serrage selon la revendication 5, caractérisé en ce que les angles sont égaux.

7. Dispositif de serrage selon une ou plusieurs des revendications 1 à 6, caractérisé en ce que les éléments de serrage sont disposés en étant décentrés par rapport aux éléments de retenue, lorsqu'on regarde à partir de l'axe de rotation du système de serrage.

8. Utilisation de systèmes de serrage selon une ou plusieurs des revendications 1 à 7 dans le cas du sciage, avec une scie annulaire, de barreaux, formés notamment d'un matériau semiconducteur.

9. Utilisation selon la revendication 8, selon laquelle on découpe des disques d'une épaisseur de 0,1 à 1 mm à partir de barreaux semiconducteurs, notamment des barreaux de silicium.
